Europäisches Patentamt

European Patent Office

Office européen des brevets

(11) Publication number : **0 547 799 A1**

## (12) EUROPEAN PATENT APPLICATION

(21) Application number : **92310916.9**

(22) Date of filing : **30.11.92**

(51) Int. Cl.$^5$ : **C09J 123/08**

(30) Priority : **17.12.91 US 808902**

(43) Date of publication of application :
**23.06.93 Bulletin 93/25**

(84) Designated Contracting States :
**BE DE FR GB**

(71) Applicant : **MINNESOTA MINING AND MANUFACTURING COMPANY**
**3M Center, P.O. Box 33427**
**St. Paul, Minnesota 55133-3427 (US)**

(72) Inventor : **Hansen, Dennis D., c/o Minnesota Mining and Manuf.**
**Company, 2501 Hudson Road, P.O. Box 33427**
**St. Paul, Minnesota 55133-3427 (US)**

(74) Representative : **Baillie, Iain Cameron et al**
**c/o Ladas & Parry, Altheimer Eck 2**
**W-8000 München 2 (DE)**

(54) **Hot-melt compositions based on ethylene/methyl acrylate copolymers which have good open time, form creep-resistant bonds, and demonstrate strength at elevated temperatures when applied in thin layers.**

(57)    A hot-melt composition consists essentially of an ethylene/methyl acrylate copolymer and a tackifying resin. When deposited on an unheated substrate in a thin layer, the composition has a limited open time of at least 5 seconds, a creep resistance of 10,000 minutes, and an elevated temperature strength of at least 1,000 minutes.

Fig. 1

EP 0 547 799 A1

## BACKGROUND OF THE INVENTION

### Field of the Invention

This invention relates generally to hot-melt compositions and, more particularly, to hot-melt compositions based on ethylene/methyl acrylate (EMA) copolymers and tackifying resins. Hot-melt compositions according to the invention have good open time, form creep-resistant bonds, and demonstrate strength at elevated temperatures when applied in thin layers.

### Description of the Related Art

Hot-melt compositions are generally understood to comprise thermoplastic materials which are solid at room temperature but which readily melt to a viscous liquid upon heating. The molten composition is applied to a substrate and the substrate is mated to a second surface. As the composition cools, it rapidly solidifies and then crystallizes or "sets up" thereby forming a bond between the substrate and the second surface. Accordingly, the term "set time" has been adopted to define the time required for the hot-melt composition to crystallize and the bond between the substrate and the second surface to form after the substrate and the second surface have been mated.

"Set time" is to be distinguished from "open time" (sometimes referred to herein as "tack bonding range") which refers to the time over which the hot-melt composition remains tacky after having been applied to an unheated, room temperature (about 20° to 22°C) substrate. Once the "open time" has been exceeded, the hot-melt composition becomes tack-free and the substrate and the second surface cannot be successfully mated unless the composition is capable of being reactivated (i.e., the composition can be rendered tacky again).

Typical uses for hot-melt compositions include the high speed, automated assembly of low strength products such as in bookbinding and packaging operations. Hot-melt compositions have traditionally been applied to a substrate as a bead. When applied in bead form, presently known hot-melt compositions may offer two advantageous properties, an open time of at least 5 seconds coupled with a relatively short set time. An open time of at least 5 seconds allows ample time for mating the surfaces to be bonded while a short set time indicates that the bond has crystallized to the extent that the mated surfaces no longer need to be clamped or held together. A short set time permits bookbinding and cardboard carton assembly equipment to be operated at maximum speed.

Another characteristic demonstrated by such compositions is their ability to form "creep-resistant "bonds. "Creep resistance" refers to the capacity of a bond to sustain a constant load under a constant stress. A bond which "creeps" moves slowly when under stress. Items bonded together by an adhesive which tends to "creep" will move, may not stay in place and may even fail. A bond which is "creep-resistant" combats this tendency.

However, it is not always desirable to apply a hot-melt composition as a bead. When a bead of adhesive is deposited on a substrate and a second surface is mated thereto, the bead is compressed and spreads out between the substrate and the second surface. In some instances, the composition may be squeezed out beyond the edges of the mated surfaces creating a messy, unaesthetic appearance. Alternatively, the composition may not fully extend to the edges of the mated surfaces thereby creating a situation referred to as "edge gap" which increases the opportunity for delamination of the substrate and the second surface. In general, when a hot-melt composition is distributed between a substrate and a second surface by compressing a bead of the composition, it is difficult to obtain a layer of the composition which uniformly covers the substrate and which is of substantially equal thickness throughout. Failure to achieve much a distribution is particularly problematic when bonding relatively thin substrates since the uneven application of the hot-melt composition may be telegraphed through the substrate (i.e., the uneven application of the hot-melt composition becomes visually apparent).

The application of hot-melt compositions as beads has been associated with other undesirable occurrences. Beads may wick through the substrate, especially if the substrate is thin. Also, a bead may indelibly stain a porous substrate.

Accordingly, there is considerable need for a hot-melt composition which may be usefully applied to a substrate in a thin layer. Such a hot-melt composition would offer extraordinary advantages over hot-melt compositions which are applied as beads. For example, the composition could be uniformly applied to the entire surface of a substrate in a layer of substantially constant thickness. The likelihood that thee composition would be squeezed out beyond the edges of the substrate or would not fully extend to the edges thereof would be greatly reduced. Similarly, a thin layer would be less likely to telegraph through, wick through, or permanently stain a substrate.

Presently known not-melt compositions, when spread as a thin layer on a room temperature substrate, do crystallize to form creep-resistant bonds. Unfortunately, these compositions also exhibit a very short open time on the order of 1 to 2 seconds. While an open time of such short duration may be acceptable in certain applications, such as some high speed, automated cardboard carton sealing operations where the surfaces to be mated can be brought together within 1 to 2 seconds of the adhesive having been deposited, in other instances it is desirable to have an open time of at least 5 seconds. For example, in the construction of signs, advertising displays and other articles having a relatively large surface area (as compared to the sealing of cardboard cartons), a relatively long open time adhesive may be required so as to provide ample time in which to complete the assembly of the article while the adhesive remains tacky.

In other industries such as lithography, die cut parts and costume jewelry, the two parts which are to be adhesively bonded must be carefully and precisely positioned with respect to each other. An adhesive with an open time of at least 5 seconds provides the assembler of such components sufficient time to accurately position the bonded parts and, if necessary, to reposition them until they are properly aligned. The 1 to 2 seconds of open time afforded by presently known hot-melt adhesives when spread in a thin layer is simply too short to allow for precision placement. (The adhesive becomes nontacky before the components can be properly positioned.)

Pressure sensitive adhesives are a class of materials which are essentially permanently tacky at room temperature and may be regarded as having a virtually infinite open time. Intuitively, materials having a virtually infinite open time would appear to be well-suited to the construction of large surface area articles or precision components because of the long time during which the construction of these articles could be completed. However, such is not the case. As the open time of an adhesive increases, the opportunity for dirt and other materials to contaminate the adhesive surface is enhanced because the tacky adhesive readily retains the same. Contaminants are aesthetically displeasing, especially in articles such as costume jewelry. More importantly, contaminants deposited on the adhesive surfaces prior to bonding can weaken the ultimate strength of the bond by reducing the available surface area of the adhesive.

The virtually infinite open time of a pressure sensitive adhesive can pose long term storage and inventory management problems too. For example, the manufacture of certain articles such as signs and advertising displays may involve laminating several panels together to provide the finished article. The number and types of panels required will depend on the ultimate size of the articles, where the articles are to be placed, and customer preferences. Consequently, it may be desirable for a manufacturer of such articles to maintain an inventory of panels which have been precoated with an adhesive to facilitate the rapid assembly of the finished articles upon customer demand. However, if these panels are coated with a pressure sensitive adhesive, the essentially permanently tacky surface will readily retain dust and dirt, rendering the useful storage of precoated panels virtually impossible. Also, the precoated panels can not be conveniently stacked (unless expensive and unwieldy release liners are employed) since they will adhere to adjacent panels in the stack.

Consequently, it would be desirable for the adhesive used to precoat such panels to have a limited open time such that the panels could be readily prepared in advance and stored. Of course, the adhesive would have to be capable of being reactivated (i.e., restored to a tacky condition) so that assembly of the finished articles could be subsequently completed.

Furthermore, pressure-sensitive adhesive compositions (even those which are considered hot-melt pressure sensitive adhesives) do not form creep-resistant bonds when spread in a thin layer. As noted above, items bonded together by an adhesive which tends to creep will move, may not stay in place, and may even fail. In the bonding of precision components, a creep-resistant adhesive helps prevent movement which would otherwise disturb the accurate positioning of the components.

Thus, it would be desirable for a hot-melt composition when spread in a thin layer to have a limited open time; that is, an open time greater than about 5 seconds (so as to exceed conventional hot-melt compositions) but which is not virtually infinite (so as to decrease the opportunity for dirt contamination as happens with conventional pressure sensitive adhesives).

In certain applications, it may be desirable to form adhesive bonds which demonstrate high strength at elevated temperatures. For example, outdoor advertising signs may be exposed to temperatures well in excess of 100°F (38°C) in certain southern climates. Indoor advertising signs displayed in store windows that receive direct sunlight may experience temperatures above 100°F (38°C). Precision components utilized in certain industrial environments may be exposed to similar temperatures. Inventory is often shipped by way of overland tractor trailer vehicles or containerized storage where internal temperatures can easily surpass 100°F (38°C).

Hot-melt compositions are often applied with dispensers commonly referred to as "glue guns." In these devices, the composition is provided in the form of a relatively hard, rigid stick or rod which is pneumatically or mechanically given into an electrically heated well or chamber at the rear of the device. Most presently known compositions require that the well be heated to a temperature of at least about 350° to 400°F (177° to 204°C) to melt the composition and to reduce its viscosity. The molten composition is forced through a barrel-like portion of the device and exits from the opposite end thereof to be applied to a substrate. The temperature of the molten composition upon discharge is typically about 330° to 380°F (166 to 193°C).

Hot-melt compositions which must be applied at a temperature of about 350° to 400°F (177 to 204°C) pose unique problem whether deposited as a bead or a thin film. For example, at these temperatures, a negligent user of the hot-melt composition may be seriously burned by contact with the same. Also, such compositions cannot be used in conjunction with relatively heat sensitive substrates (e.g., expanded polystyrene) as the same may melt. Furthermore, such hot-melt compositions can be more difficult to apply. Because of the relatively high melting temperatures, a large power supply is needed to heat the glue gun chamber so as to melt the adhesive rod, thereby limiting the ability to use a portable power supply (such as batteries, for example). Similarly, the time required to heat the glue gun to the proper operating temperature is increased.

Several references disclose or suggest the use of adhesive or hot-melt compositions based on EMA copolymers. British Patent Specification No. 1,463,846 discloses a pressure sensitive adhesive comprising 80%-30% by weight of an EMA copolymer having 25-50% methyl acrylate, and 20%-70% by weight of a tackifier. Reportedly, after 7 days aging at 70°C, the compositions were still tacky and the shear strength (when measured as the time to failure of a weighted sample) did not exceed two hours after conditioning for 24 hours at 50°C.

German Patent Publication No. 2,523,617 is substantially similar to the immediately preceding British publication but is directed to EMA copolymers having a melt index of 101-550 g/10 min. (The melt index of the EMA copolymers in the British patent specification is 10-100 g/10 min.)

European Patent Application No. 0,348,200 discloses hot-melt adhesives based on equal amounts of ethylene modified copolymers (including ethylene modified with methacrylates), tackifiers and synthetic waxes. The adhesives are reportedly an improvement over other ethylene modified hot-melt adhesives because they employ chain transfer agents which do not become incorporated into the copolymer backbone thereby resulting in nil side chain branching.

A series of eight related United States Patents (U.S. Pat. Nos: 4,320,211; 4,324,871, 4,325,853; 4,338,414; 4,338,415; 4,338,416; 4,340,687; and 4,359,552) to Acharya et al. disclose hot-melt compositions comprising 10-40 weight % of a tackifying resin, 20-60 weight % of an ethylene copolymer (including EMA copolymers), and 10-30 weight % of an alkenyl succinic anhydride. The patents are distinguished from one another by citing different tackifying resins. Because the succinic anhydride is a liquid, it was most likely incorporated to reduce the melt viscosity of the hot-melt compositions. Succinic anhydride has been found to decrease the heat resistance or elevated temperature strength of hot-melt compositions made therewith.

U.S. Pat. No. 4,337,297 to Karim et al. discloses an extrudable thermoplastic composition containing an EMA copolymer, a tackifying resin, and at least 10 weight % of a chlorinated polyethylene. Bonds to polyethylene terephthalate (PET) were formed by distributing a powder of the blend between two PET films and applying a pressure of 2500 lbs./in² at 300°F for 10 minutes. Chlorinated polyethylene has been found to dramatically decrease the open time of compositions made therewith.

European Patent Publication No. 0,340,990, assigned to the assignee of the instant application, discloses a hot-melt composition comprising an ethylen/vinyl acetate copolymer and a tackifying resin. When deposited as a thin film about 50 μ (microns) thick on a room temperature substrate, the composition has an open time of at least 5 seconds and then forms a creep-resistant bond without applying more than and pressure. Although these compositions offer some extraordinary properties, they are not as desirable in applications which call for strength at elevated temperatures.

Thus, there is a need for a hot-melt composition which, when spread in a thin layer, has a limited open time of at least 5 seconds. Compositions with an open time of at least 5 seconds are needed when bonding large surface area substrates and precision components. However, the open time of such compositions should be limited. That is, they should not have a virtually infinite open time as do pressure sensitive adhesives so as to reduce the likelihood of dirt contamination on the edges of a substrate and the deterioration of bond strength which can occur if dirt contaminates the tacky substrate before bonding.

It would also be advantageous if such compositions were creep-resistant, especially if used to bond precision components. Also such compositions should demonstrate good strength at elevated temperatures (e.g., in excess of 100°F (38°C)) so as to be useful in bonding articles likely to be subjected to high temperatures. Presently known hot-melt composition which can be usefully spread in a thin layer do not demonstrate the elevated temperature strength needed for certain applications.

Several other characteristics would further contribute to the desirability of the hot-melt compositions. For example, it would be preferred if bonds could be formed without applying more than hand pressure or without supplying more heat than is generated by the application of hand pressure. A composition having such bond formation characteristics would be remarkably easy to use. Large, cumbersome heated presses would not be required to assemble components.

Presently known hot-melt compositions based on EMA copolymers do not demonstrate a limited open time of at least 5 seconds, creep resistance, and good strength at elevated temperatures when deposited as thin films on unheated (i.e., room temperature) substrates. Moreover, those compositions which are presently known do not exhibit these characteristics in combination with the ability to form bonds without applying heat or more than hand pressure.

## SUMMARY OF THE INVENTION

This invention relates to hot-melt compositions which have a limited open time or tack bonding range of at least 5 seconds so as to permit the bonding of large surface areas substrates and precision components. By a limited open time it is meant that the hot-melt compositions do not display a virtually infinite open time as do pressure sensitive adhesives. Hot-melt compositions according to the invention ultimately crystallize to form creep-resistant bonds (i.e., bonds with a creep resistance of at least 1,000 minutes, preferably at least 10,000 minutes) without applying more than hand pressure or more heat than results from the application of hand pressure. Compositions according to the invention also display good strength at elevated temperatures, including temperatures in excess of about 100°F (38°C), and have an elevated temperature creep resistance or heat resistance of at least 1,000 minutes. Suprisingly, these features are attained even when the compositions are spread as thin films about 50 to 250 microns (μ) thick onto unheated substrates.

Hot-melt compositions according to the invention comprise an EMA copolymer and a tackifying resin. The EMA copolymer preferably has a melt index greater than 70, more preferably from 70 to 300, and most preferably from 80 to 270. The EMA copolymer also has a methyl acrylate content less than 35%, more preferably less than 25%, and most preferably from 21% to 23%. The compositions may also contain other ethylene-containing copolymers such as ethylene/vinyl acetate and/or ethylene/n-butyl acrylate.

A wide variety of tackifying resins may be used in accordance with the invention, including, but not limited to, hydrogenated polyterpenes, hydrogenated hydrocarbons, aromatic hydrocarbons, aromatic modified aliphatic hydrocarbons, hydrogenated rosin esters and the like. Preferably, the tackifying resin has a combined aromatic and olefinic content in the range of 0.5 mole % to 50 mole % and a ring and ball softening point greater than 70°C, more preferably in the range of about 70° to 125°C, and most preferably in the range of about 85° to 115°C.

Hot-melt compositions according to the invention preferably comprise from about 80 to 210 parts of the tackifying resin per 100 parts of the copolymer, more preferably from about 140 parts to about 200 parts. The compositions may be dispensed from conventional hot-melt applicators or may be formulated as nontacky adhesive sticks.

## BRIEF DESCRIPTION OF THE DRAWING

The invention will be more fully understood with reference to the following drawing in which:

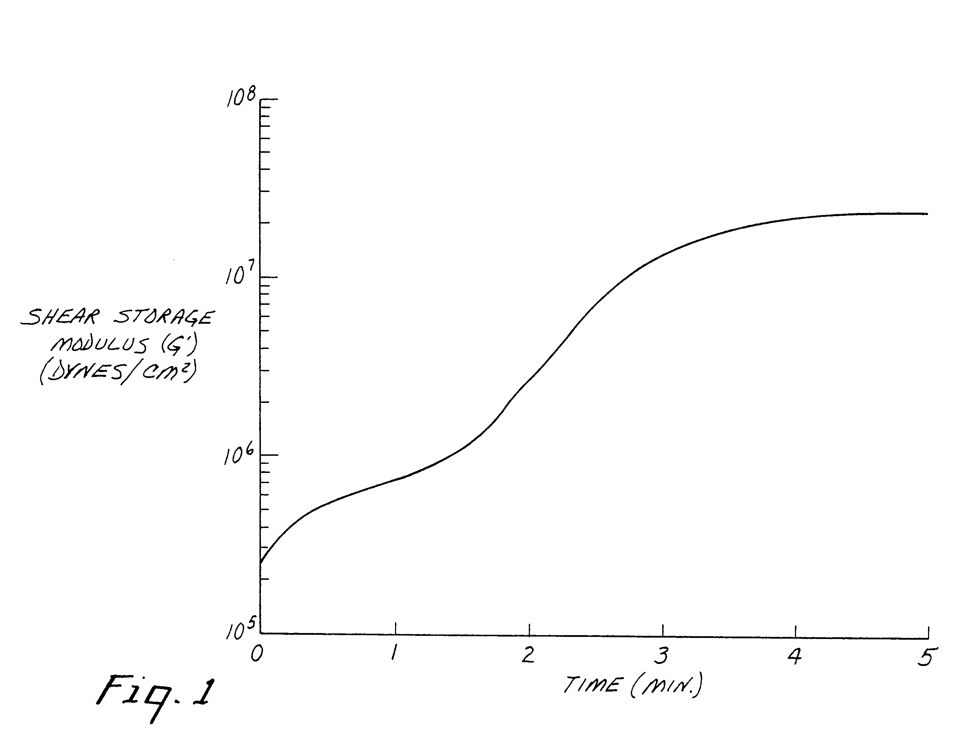

FIG. 1 is a graphical representation of time vs. shear storage modulus for a hot-melt composition according to the invention.

## DETAILED DESCRIPTION OF THE PREFERRED EMBODIMENTS

This invention relates to hot-melt compositions based on ethylen/methyl acrylate (EMA) copolymers and tackifying resins. In a preferred form, compositions according to the invention are employed as hot-melt adhesives. Although the following description focuses on the use of the compositions as hot-melt adhesives, it will be understood that they may also be useful as hot-melt coatings and sealants.

Hot-melt compositions according to the invention exhibit a combination of desirable properties not heretofore found in a single EMA-base hot-melt composition. Compositions according to the invention have a limited open time or tack bonding range (time during which the compositions remain tacky at room temperature, about 20° to 22°C). That is, compositions according to the invention have open times which exceed 5 seconds without being virtually infinite. Thus, compositions according to the invention display a tack bonding range which provides ample time for bonding large surface area substrates and precision components while minimizing the deleterious effects of dirt intrusion and other problems, as described more fully hereinabove.

The novel compositions described herein ultimately crystallize to form creep-resistant bonds (i.e., stable, failure-resistant bonds) and display good strength at elevated temperatures, including temperatures in excess of about 100°F (38°C). Bonds made with compositions according to the invention may be formed without applying more than hand pressure or more heat than results from the application of hand pressure. Surprisingly, these features are attained even when the compositions are spread as thin films (about 50 to 250 μ thick) onto

unheated (i.e., room temperature) substrates, much to the contrary of presently known hot-melt compositions.

In addition to all of these advantages, compositions according to the invention can be applied with conventional applicators but at relatively low temperatures of about 260°F (127°C) or less, whereas most presently known hot-melt compositions have application temperatures in the range of about 350° to 400°F (177° to 204°C). Thus, hot-melt compositions according to the invention, as opposed to most of those which are presently known, are less likely to burn a user and can be employed with heat sensitive substrates.

The EMA copolymer preferably has a melt index greater than 70, more preferably from 70 to 300, and most preferably from 80 to 270. If the melt index is less than about 70, hot-melt compositions made therefrom may be too viscous to be readily extruded or coated onto a substrate using conventional hot-melt composition dispensers at application temperatures of about 260°F (127°C) or less. It is believed that there is no effective upper limit on the melt index of EMA copolymers which may be used according to the invention, although the use of higher melt index copolymers may be practically limited by factors such as cost and commercial availability.

The methyl acrylate (MA) content of the EMA copolymer should be less than 35%, more preferably less than 25%, and most preferably from about 21% to 23%. At a MA content in the range of about 25% to 35%, the compositions may be too soft and amorphous and may lose their capacity to form strong, creep-resistant bonds. However, if the MA content is substantially less than about 21%, the hot-melt compositions may not be sufficiently tacky (i.e., the open time becomes too short) when spread as a thin layer.

The expression "ethylene/methyl acrylate copolymer," beyond including copolymers of ethylene and methyl acrylate, also encompasses terpolymers and tetrapolymers comprising ethylene, methyl acrylate, vinyl acetate and/or n-butyl acrylate. Alternatively, the EMA copolymer may be blended with one or more other ethylene-containing copolymers such. as ethylene/vinyl acetate (EVA) and/or ethylene/n-butyl acrylate (EnBA). In the case of an EVA copolymer, it is preferred that the copolymer have a melt index of at least 150 (preferably at least 500) and from 14% to 35% (preferably from 23% to 30%) vinyl acetate. In the case of an EnBA copolymer, it is preferred that the copolymer have a melt index of at least about 400 and from 25% to 40% (preferably from 30% to 38%) n-butyl acrylate.

Each of the EMA, EVA and EnBA copolymers may include small amounts of other materials such as stabilizers, antioxidants, melt-index modifiers (e.g., isobutylene and propylene), and various reactive monomers such as acrylic acid and methacrylic acid which may be useful in modifying the physical properties of the copolymers. Preferably, these "other materials" comprise less than 10% by weight of the total copolymer(s).

Representative examples of useful EMA copolymers and/or EMA copolymers used to prepare the examples described below include:

| No. | Trade Designation | Source | Nominal % MA* | Nominal Melt Index* |
|---|---|---|---|---|
| A | LDX-310 | Exxon Chem. Co. | 23% | 80 |
| B | LDX-296 | Exxon Chem. Co. | 22-23% | 129 |
| C | TC-140 | Exxon Chem. Co. | 21% | 135 |
| D | LDX-316 | Exxon Chem. Co. | 23% | 249 |
| E | XS 93.04 | Exxon Chem. Co. | 21% | 270 |
| F | XV 53.04 | Exxon Chem. Co. | 35% | NA |

NA = Not available.

*As reported by the manufacturer or supplier.

EMA copolymers A, B, D and E, as commercially availabe, are modified with small amounts (0.8% to 1%) of methacrylic acid. Acid modified (for example, using methacrylic acid) copolymers are especially useful when enhanced heat resistance and elevated temperature strength are desired and are particularly well suited for use with low melting point tackifying resins.

A wide variety of tackifying resins (sometimes referred to herein as tackifiers) may be used in accordance with the invention. Representative tackifiers and/or tackifiers used to prepare the following examples, are tabulated below.

| No. | Trade Designation | Source | Arom./olef. cont. (mole %) | Nom. Soft. Point (°C) | Description |
|---|---|---|---|---|---|
| A | CLEARON P-85 | Yashuhara Yushi* | 2.8 | 85 | hydrog. polyterpene |
| B | CLEARON P-105 | Yashuhara Yushi | 2.8 | 105 | hydrog. polyterpene |
| C | CLEARON P-115 | Yashuhara Yushi | 2.8 | 115 | hydrog. polyterpene |
| D | CLEARON P-125 | Yashuhara Yushi | 2.8 | 125 | hydrog. polyterpene |
| E | ESCOREZ 5300 | Exxon Chem. Co. | 0 | 105 | hydrog. hydrocarbon |
| F | ESCOREZ 149A | Exxon Chem. Co. | 16 | 105 | arom. mod. aliphatic hydrocarbon |
| G | ESCOREZ 149B | Exxon Chem. Co. | 16 | 95 | arom. mod. aliphatic hydrocarbon |
| H | ESCOREZ 165A | Exxon Chem. Co. | 24 | 105 | arom. mod. aliphatic hydrocarbon |
| I | ESCOREZ 165B | Exxon Chem. Co. | 24 | 95 | arom. mod. aliphatic hydrocarbon |
| J | FORAL 85 | Hercules Inc. | 6.1 | 85 | hydrog. rosin ester |

| | | | | | |
|---|---|---|---|---|---|
| K | HERCOTAC LA 95 | Hercules Inc. | 42.9 | 93 | arom. hydrocarbon |
| L | KRISTALEX 3085 | Hercules Inc. | 68.1 | 85 | methylstyrene |
| M | PICCOLYTE HM106 | Hercules Inc. | 40 | 106 | arom. mod. terpene |
| N | PICCOLYTE HM90 | Hercules Inc. | 25 | 90 | arom. mod. terpene |
| O | PICCOVAR L-60 | Hercules Inc. | 50 | 56-60 | arom. hydrocarbon |
| P | REGALITE 7070 | Hercules Inc. | 10.7 | 70 | arom. hydrocarbon |
| Q | REGALITE M-355 | Hercules Inc. | 7.4 | 85 | hydrog. wood rosin |
| R | REGALREZ 1094 | Hercules Inc. | 0 | 94 | hydrog. hydrocarbon |
| S | ARKON M-90 | Arakawa | 15 | 90 | hydrog. arom. hydrocarbon |
| T | ARKON M135 | Arakawa | 20 | 135 | hydrog. hydrocarbon |

*Yashuhara Yushi Kogyo Co., Ltd.

The saturated aliphatic content of each tackifying resin is the difference between 100% and the aromatic/olefinic content ("Arom./olef. cont.") given above. To provide the above-described extraordinary combination of protracted tackiness at room temperature, creep-resistant bonding, and elevated temperature strength when the compositions are applied as thin films, it is believed that there must be some compatibility between the tackifying resin and the ethylene and methyl acrylate moieties of the EMA copolymer as well as the vinyl acetate and n-butyl acrylate moieties, if such be present.

Preferred compatibility between the tackifying resin and the ethylene moiety of the EMA copolymer should be realized when the tackifying resin has a combined aromatic and olefinic content of at least 0.5 mole % as determined by carbon-13 NMR analysis (nuclear magnetic resonance spectroscopy, also known as magnetic resonance imaging), although, in some instances, as explained more fully hereinbelow, a tackifying resin with a combined content of less than 0.5 mole % may be useful. However, when the aromatic/olefinic content exceeds about 50 mole %, the tackifying resin may not be sufficiently compatible with the methyl acrylate moiety of the EMA copolymer. Enhanced compatibility also improves clarity of the adhesive for aesthetic purposes and, when clarity is important, no more than 50 mole % of the saturated aliphatic content of the tackifying resin should be cycloaliphatic. The aromatic/olefinic content may be determined by analytical techniques other than carbon-13 NMR, although it is expected that the results from different approaches will be consistent.

The nominal ring and ball softening point ("Nom. Soft. Point") (as determined by ASTM test method E-28) preferably is greater than 70°C and less than about 125°C. More preferably, the nominal ring and ball softening point is in the range of 85°C to 115°C. Preferred tackifying resins include polyterpene resins, hydrogenated wood rosins, and derivates thereof such as water-white hydrogenated polyterpene resins having nominal ring and ball softening points between about 85°C and 115°C. Also preferred are aromatic modified aliphatic hydrocarbon resins such as ESCOREZ 165A and ESCOREZ 165B, as presently commercially available from Exxon Chemical Co. Blends or combinations of the resins may be used as well.

Hot-melt compositions according to the invention preferably comprise from about 80 to about 210 parts tackifying resin per 100 parts of the copolymer, more preferably from about 140 parts to about 200 parts. Above 200 parts, adhesive bonds made with the hot-melt composition may be less resistant to impact and below about 140 parts may be less tacky.

In addition to an EMA copolymer and a tackifying resin, hot-melt compositions according to the invention may also comprise small amounts of other additives that have customarily been used in hot-melt formulations such as antioxidants, stabilizers, ultraviolet absorbers, pigments, fillers, viscosity reducers (for example, plasticizers and the like), polymeric bubbles, polymeric hollow microspheres, glass bubbles or beads, ceramic bubbles, and metal-coated ceramic or glass bubbles. These additives should only be present in an amount that does not materially adversely affect the tack bonding range, ultimate bond strength, or neat resistance of the composition. Typically the total amount of such additives does not exceed about 25% by weight of the hot-melt composition.

Hot-melt compositions according to the invention may be prepared by mixing the components thereof at a temperature somewhat above their softening points under an inert atmosphere blanket. The resulting hot-melt compositions may be converted into rods, cylinders, slugs, billets or pellets and dispensed directly from known melt reservoir bulk not-melt applicators or pail unloaders. They may also be sprayed or blown to form webs. Alternatively, they may be coated and extruded onto release liners to form free-standing reactivatable films.

Preferably, the hot-melt compositions are provided as sticks or rods that may be mechanically or pneumatically supplied to the heated well or chamber of a "glue gun" type dispenser such as those illustrated in U.S. Pat. Nos. 4,621,748 and 4,457,457, each to Dziki. Compositions according to the invention which are too soft to be readily formed into a stick or rod that can be supplied to a "glue gun" may still be dispensed therefrom by using a cartridge containing the composition, as will be understood by those skilled in the art.

Preferably, the hot-melt compositions are applied to a substrate in a thin (approximately 50 to 250 μ, preferably 50 to 125 μ) layer at a temperature of about 260°F (127°C) or less although temperatures in excess of this may be required depending on the physical characteristics of the particular hot-melt composition. (These temperatures do not refer to the actual temperature of the dispensed adhesive, but rather to the thermostat temperature of the hot-melt "glue gun" applicator.) Once the composition has been applied to the substrate, the substrate is mated with a second surface while the adhesive remains tacky. The substrate and the second surface can be successfully mated by applying no more than hand pressure or no more heat than results from the application of hand pressure (sometimes referred to herein as applying "hand pressure") to form a creep-resistant bond.

Heat which is necessary to form the bond between the substrate and the second surface is to be distinguished from the heat which is necessary to apply or activate the hot-melt composition in the first instance. The hot-melt compositions of the invention, like those which are presently known, are provided as solid materials which must be heated to melt and activate them ("the heat of activation") so that they can be supplied as viscous liquids to a substrate. This heat is typically provided by a hot-melt applicator such as a "glue gun."

Advantageously, however, once the hot-melt compositions of the invention are applied to an unheated (room temperature) substrate, a bond may be formed with a second surface merely by applying hand pressure (or no more heat than results from the application of hand pressure). Other hot-melt compositions which are presently known, such as those disclosed in the above-referenced U.S. Pat. No. 4,337,297, require the application of substantial heat and/or pressure to form a bond once the composition has been deposited on a substrate.

Hot-melt compositions according to the invention may also be formulated as sticks which can be applied by hand. The sticks themselves are nontacky but when rubbed against an unheated substrate deposit a thin layer of adhesive which has an open time of at least 5 seconds. The heat of activation is generated by the friction which results from rubbing the stick against the substrate. A subsequent bond to a second surface may be made merely by applying hand pressure. Such bonds have sufficient strength to tear paper. Because these hand sticks require a relatively small amount of heat to activate the hot-melt composition, the thin layer of deposited adhesive may be readily reactivated. That is, once the adhesive has been deposited onto a substrate it becomes nontacky once its open time is exceeded. However, such adhesives can be readily restored to a tacky state by merely rubbing the deposited layer. Once the adhesive has been returned to a tacky condition, a bond to a second surface may be made in the usual manner as described herein.

The inventive compositions may also be applied as nontacky coatings for a substrate. If, after application to a substrate, the coating becomes nontacky, it can be subsequently reactivated by heating or rubbing, either before or after being contacted with a material to be bonded thereto. Hot-melt compositions which behave in this manner are especially useful in preparing large surface area panels for intermediate storage before ultimate assembly, such as described hereinabove with regard to advertising displays and the like.

Hot-melt compositions according to the invention exhibit a tack bonding range of at least 5 seconds when deposited as an approximately 50 to 250 $\mu$ thick layer on an unheated substrate. However, the hot-melt compositions do not have a virtually infinite open time as do pressure sensitive adhesives. Thus, hot-melt compositions according to the invention may be regarded as having a limited open time of at least 5 seconds.

Tack bonding range was determined by depositing an approximately 100 $\mu$ thick, 1.9 centimeter (cm) wide layer of the hot-melt composition at about 260°F (127°C) (thermostat temperature) onto ordinary white, 20 lb. bond typing paper otherwise maintained at room temperature (about 20° to 22°C). (Layer thickness varied somewhat due to slight differences in application in technique.) A second sheet of the same paper was placed over the deposited layer and a 2.2 kilogram (kg) roller was passed over the sheets once at a speed of about 7.5 cm/second. The bonded sheets were immediately subjected to a 180° peel at a separation rate of 30 cm/minute. Paper delamination or tearing occurred at approximately 12 newtons. The maximum time between depositing the layer and passing the roller that results in tearing of the paper is the open time or tack bonding range of the composition. Thus, the tack bonding range is a measure of the time during which the adhesive remains tacky after having been applied to a room temperature substrate.

Bonds formed with hot-melt compositions according to the invention ultimately crystallize and become creep-resistant. Creep refers to the dimensional change a material undergoes as a function of time when the material is under a sustained load. (A material which creeps moves slowly under stress.) An article bonded to a substrate by a creep-resistant adhesive will remain in place and will not move or slip, a particularly important attribute for bonding precision components. Creep resistance is measured by ASTM Test Method D3654 except that the adhesive is deposited in layer about 100 $\mu$ thick onto polyester film from a hot-melt adhesive dispenser and the mass suspended from the film is 1 kg. The test is sometimes discontinued after 10,000 minutes if no failure occurs. A creep-resistant bond will not fail at 1,000 minutes and preferably will not fail at 10,000 minutes.

The tackiness and creep resistance of hot-melt compositions according to the invention may also be assessed with reference to the shear storage modulus (G') (compression modulus) of the composition. Shear storage modulus is the ratio of stress to strain for the composition. An approximately 100 $\mu$ thick layer of adhesive is sufficiently tacky to form bonds under ordinary hand pressure at room temperature when its shear storage modulus is less than $1 \times 10^6$ dynes/cm$^2$ and can do so more easily when its shear storage modulus is less than $7 \times 10^5$ dynes/cm$^2$. After the shear storage modulus of the adhesive layer has increased above $5 \times 10^6$ dynes/cm$^2$, a bond which was made when the adhesive was tacky may be creep-resistant. To assure good creep resistance, the ultimate shear storage modulus should be at least $1 \times 10^7$ dynes/cm$^2$. For a discussion of shear storage modulus see Satas, Handbook of Pressure-Sensitive Adhesive Technology, Van Nostrand Reinhold Co., New York, 1982, pp. 82-83.

Compositions according to the invention also demonstrate good strength at elevated temperatures (sometimes referred to herein as heat resistance, elevated temperature strength or elevated temperature creep resistance, which is to be distinguished from the creep resistance described hereinabove which was determined at room temperature and which is simply referred to herein as creep resistance). That is, adhesive compositions according to the invention do not fail, even at temperatures in excess of about 100°F (38°C). In certain industrial and commercial environments, as explained more fully hereinabove, temperatures may well exceed 100°F (38°C).

Elevated temperature strength was determined by depositing a thin (approximately 75 to 100 $\mu$) layer of adhesive from a hot-melt applicator at about 260°F (127°C) thermostat temperature onto a 50 $\mu$ thick polyethylene glycol terephthalate film otherwise maintained at room temperature. (The actual application temperature varied with the melt index of the composition. Relatively low melt index compositions required relatively higher application temperatures.) (Layer thickness varied somewhat due to slight differences in application technique.) Immediately, a solvent-wiped, dry, stainless steel coupon was mated to the film with a single pass of 2 kg rubber roller to form a bonded overlap area measuring 2.0 cm x 2.5 cm and the bonded assembly was aged at room temperature for 24 hours. The free end of the stainless steel coupon was clamped in a vertical position in a 122°F (50°C) air-circulating oven with a 1 kg mass suspended from the free end of the film. The oven temperature was maintained at 122°F (50°C). The elapsed time for the bond to fail was recorded. Hot-melt compositions useful in the invention will have a holding time of at least 1,000 minutes. The elevated temperature strength test is a measure of the ability of an adhesive composition to support a constant load under a constant temperature for a sustained time.

The invention will be more fully appreciated with reference to the following illustrative and nonlimiting examples which are intended to set forth the unique characteristics of the hot-melt compositions. In the examples all parts are by weight unless specified otherwise.

## General Preparation

Various hot-melt compobitions were prepared for the following examples. In general, an EMA copolymer and a tackifying resin were heated under a nitrogen blanket to about 149°C with hand mixing. After about 5 minutes at this temperature, the melt was poured into a mold and allowed to cool to provide a toothed rod of adhesive as illustrated in U.S. Pat. No. 4,621,748 (Dizki). Various examples were tested for tack bonding range, creep-resistance and/or elevated temperature strength according to the procedures described above. The compositions of the examples were deposited onto substrates using conventional, commercially available hot-melt applicators.

## Examples 1-24

With the exception of examples 1, 23 and 24, a series of toothed rods was made as described in the general preparation. (In examples 1, 23 and 24, the hot-melt composition was poured into a cartridge of the kind typically used with conventional cartridge type hot-melt applicators.) Each example (including examples 1, 23 and 24) comprised 100 parts of an EMA copolymer and 150 parts of a tackifying resin. The EMA copolymer and the tackifying resin were varied as shown below in Table I. With the exception of examples 1, 2, 4, 10, 17, 18, 23 and 24, each had an open time of at least 5 seconds, a creep resistance which exceeded 10,000 minutes, and an elevated temperature strength of at least 1,000 minutes.

Examples 4, 10, 17 and 18 each had an open time of about 0 seconds; that is, they almost immediately became nontacky after being deposited onto the substrate. Example 4 is believed to have been unacceptable due to the high aromatic/olefinic content (68.1%) of the tackifying resin while the low aromatic/olefinic content of the tackifying resin of example 10 (0%) is believed to account for its negligible tack bonding range. However, other tackifying resins having a nominal aromatic/olefinic content (such as example 14) were acceptable. The tackifying resin of example 14 is believed to be based on cyclopentadiene which has a structure sufficiently similar to true aromatic materials that it permits a hot-melt composition made therewith to exhibit an open time of at least 5 seconds. Examples 17 and 18 included tackifying resins having a softening point of at least 125°C, which is believed to account for their unacceptably short tack bonding range.

Examples 4, 10, 17 and 18 were not tested for creep resistance and/or elevated temperature strength because they did not exhibit a tack bonding range of at least 5 seconds so as to be useful in accordance with the invention.

Examples 1, 2, 23 and 24, while having a tack bonding range of at least 5 seconds and a creep resistance of at least 10,000 minutes, demonstrated an elevated temperature strength of less than 1,000 minutes so as not to be useful in accordance with the invention. The tackifying resins used in examples 1 and 2 had a ring and ball softening point of 70°C or less which is believed to account for their poor performance in the elevated temperature strength test. Examples 23 and 24 are believed to have not performed in accordance with the invention due to the high (35%) methyl acrylate content of the EMA copolymer. With regard to the EMA copolymer, Table I describes the utility of having a methyl acrylate content less than 35%, more preferably less than 25%, and most preferably in the range of 21% to 23%. Table I also shows the benefit of the EMA copolymer having a melt index greater than 70, more preferably in the range of 70 to 300, and most preferably in the range of 80 to 270.

Table I illustrates the benefit of using a tackifying resin having a nominal softening point greater than 70°C, more preferably from 70° to 125°C, and most preferably in the range of about 85° to 115°C. Table I further shows that tackifying resins having a combined aromatic/olefinic content in the range of about 0.5 mole % to about 50 mole % are useful. Tackifying resins having a combined aromatic/olefinic content less than 0.5 mole % may also be employed if the resin is based on a material that is structurally similar to an aromatic system such as, for example, cyclopentadiene.

The performance of example 7 will be further appreciated with reference to FIG. 1, a graphical representation of shear storage modulus (G') as a function of time. According to FIG. 1, the hot-melt composition of example 7 had a shear storage modulus which did not exceed $7 \times 10^5$ dynes/cm$^2$ for about 90 seconds. The ultimate shear storage modulus exceeded $1 \times 10^7$ dynes/cm$^2$. As noted above, a layer of adhesive about 50 $\mu$ thick is sufficiently tacky to form bonds under hand pressure at room temperature when its shear storage modulus is less than $1 \times 10^6$ dynes/cm$^2$ (preferably, less than $7 \times 10^5$ dynes/cm$^2$). Once the shear storage modulus of the adhesive increases to about $5 \times 10^6$ dynes/cm$^2$, a bond made when the adhesive was tacky may be creep-resistant. Preferably, the ultimate shear storage modulus is at least $1 \times 10^7$ dynes/cm$^2$.

The hot-melt composition of example 3 was also formulated into a non-tacky stick, which, when rubbed against a piece of ordinary typing paper, deposited a thin layer of adhesive which had an open time of about 5 seconds. When a second piece of the same kind of paper was bonded to the adhesive, the resulting bond was sufficiently strong to tear the paper.

**TABLE I**

| Example No. | EMA Copolymer | Tackifying Resin | Tack Bonding Range (Sec.) | Creep Resistance (Min.) | Elevated Temperature Strength (Min.) |
|---|---|---|---|---|---|
| 1 | B | O | 15 | >10,000 | 30 |
| 2 | B | P | 55 | >10,000 | <1,000 |
| 3 | B | A | 20 | >10,000 | >1,000 |
| 4 | B | L | 0 | NT | NT |
| 5 | B | J | 10 | >10,000 | >1,000 |
| 6 | B | Q | 7 | >10,000 | >1,000 |
| 7 | B | N | 30 | >10,000 | >1,000 |
| 8 | B | S | 15 | >10,000 | >1,000 |
| 9 | B | K | 15 | >10,000 | >1,000 |
| 10 | B | R | 0 | NT | NT |
| 11 | B | G | 5 | >10,000 | >1,000 |

| Example | | | | | |
|---|---|---|---|---|---|
| 12 | B | I | 15 | >10,000 | >1,000 |
| 13 | B | B | 30 | >10,000 | >1,000 |
| 14 | B | E | 10 | >10,000 | >1,000 |
| 15 | B | H | 8 | >10,000 | >1,000 |
| 16 | B | C | 25 | >10,000 | >1,000 |
| 17 | B | D | 0 | NT | NT |
| 18 | B | T | 0 | NT | NT |
| 19 | A | I | 20 | >10,000 | >1,000 |
| 20 | C | I | 20 | >10,000 | >1,000 |
| 21 | D | I | 20 | >10,000 | >1,000 |
| 22 | E | I | 20 | >10,000 | >1,000 |
| 23 | F | N | 30 | >10,000 | 10 |
| 24 | F | I | 40-45 | >10,000 | 17 |

NT = Not tested.

## Examples 25-37

A series of hot-melt compositions was prepared as described in the general preparation using 100 parts of EMA copolymer B and tackifying resin N, the amount (parts) of tackifying resin being varied as shown below in Table II.

16

**Table II**

| Example No. | Amount of Tackifying Resin | Tack Bonding Range (Sec.) | Elevated Temperature Strength (Min.) |
|---|---|---|---|
| 25 | 50 | 0 | NT |
| 26 | 100 | 7 | >1,000 |
| 27 | 120 | 12 | >1,000 |
| 28 | 130 | 15 | >1,000 |
| 29 | 140 | 20 | >1,000 |
| 7 | 150 | 30 | >1,000 |
| 30 | 160 | 30 | >1,000 |
| 31 | 170 | 35 | >1,000 |
| 32 | 180 | 35 | >1,000 |
| 33 | 200 | 20 | >1,000 |
| 34 | 225 | 3 | NT |
| 35 | 250 | 1 | NT |
| 36 | 275 | 1 | NT |
| 37 | 300 | 0 | T |

NT = Not tested.

Table II shows the benefit of using between 80 and 210 parts of a tackifying resin per 100 parts of the EMA copolymer, preferably 140 to 200 parts, and more preferably 150 to 180 parts.

**Examples 38-41**

A series of hot-melt compositions was prepared according to the general preparation. Each composition comprised 100 parts EMA copolymer B, 150 parts tackifying resin N, and a small amount of a wax. Testing of these compositions is shown in Table III. The "Amount of Wax" was measured in parts per 100 parts combined weight of the copolymer and tackifying resin. The wax used in each example was PARAFLINT H-1, a microcrystalline wax commercially available from Moore & Munger Marketing, Inc.

## Table III

| Example No. | Amount of Wax | Tack Bonding Range (Sec.) | Elevated Temperature Strength (Min.) |
|---|---|---|---|
| 7 | 0 | 30 | >1,000 |
| 38 | 1 | 10 | >1,000 |
| 39 | 3 | 7 | >1,000 |
| 40 | 5 | 3 | NT |
| 41 | 10 | 0 | NT |

NT = Not tested.

Table III shows that less than about 5 parts of a wax per 100 parts combined weight of the copolymer and tackifying resin may be successfully incorporated into hot-melt compositions according to the invention without materially adversely affecting the performance thereof. However, if more than about 5 parts of a wax are included, the tack bonding range of the composition becomes unacceptably short.

In some applications it is desirable to add small amounts of wax to the hot-melt composition, for example, to further improve the elevated temperature strength or to lower viscosity. However, it is generally understood that waxes will decrease the tack bonding range of an adhesive. With the EMA/tackifying resin blends of the invention, small amounts of wax can be added while still maintaining a tack bonding range of at least 5 seconds. Waxes suitable for use in the compositions of the invention include, for example, those which may be characterized as high melting (above 100°C) synthetic waxes such as synthetic, high density, low molecular weight polyethylene waxes or "Fischer-Tropsch" waxes.

### Examples 42-45

A series of hot-melt compositions was prepared according to the general preparation. Example 42 was based on a composition comprising 100 parts EMA copolymer B and 150 parts of a blend of tackifying resins which contained about 57.3 parts tackifying resin E, 57.3 parts tackifying resin G, and 35 parts tackifying resin N. Testing of this example is shown below in Table IV and indicates that a blend of various tackifying resins may be successfully used in accordance with the invention.

Examples 43 to 45 employ the tackifying resin combination of example 42 (150 parts) and EMA copolymer B in conjunction with other ethylene-containing copolymers. Example 43 is based on an equal parts by weight blend (100 parts total) of EMA copolymer B and EA-89822, an ethylene/n-butyl acrylate copolymer having an n-butyl acrylate content of about 35% and a melt index of about 400 (commercially available from Quantum Chemical Corp.).

In example 44, equal parts by weight (100 parts total) of EMA copolymer B and EP-49696W, an ethylene/vinyl acetate copolymer having a vinyl acetate content of 28% and a melt index of about 1000 (commercially available from E.I. du Pont de Nemours & Co.) were blended with the tackifying resin combination of example 42.

In example 45, the tackifying resin combination of example 42 was combined with an equal parts by weight blend (100 parts total) of EMA copolymer B, EA-89822 and EP-49696W.

Testing of examples 42-45 is shown below in Table IV and illustrates that both blends of tackifying resins and blends of EMA with other ethylene-containing copolymers may be successfully employed in accordance with the invention.

**TABLE IV**

| Example No. | Tack Bonding Range (Sec.) | Creep Resistance (Min.) | Elevated Temperature Strength (Min.) |
|---|---|---|---|
| 42 | 14 | >10,000 | >1,000 |
| 43 | 25 | >10,000 | >1,000 |
| 44 | 20 | >10,000 | >1,000 |
| 45 | 25 | >10,000 | >1,000 |

Reasonable variations and modifications are possible within the foregoing specification and drawing without departing from the scope of the invention which is defined in the accompanying claims.

**Claims**

1. A hot-melt composition consisting essentially of an ethylene/methyl acrylate copolymer and a tackifying resin, wherein said composition has a limited open time of at least 5 seconds when deposited as a thin layer on a room temperature substrate.

2. A hot-melt composition according to claim 1 wherein said ethylene/methyl acrylate copolymer comprises less than 35% methyl acrylate.

3. A hot-melt composition according to claim 1 wherein said ethylene/methyl acrylate copolymer has a melt index greater than 70.

4. A hot-melt composition according to claim 1 wherein said tackifying resin is selected from the group consisting of cyclopentadiene and tackifying resins having an aromatic/olefinic content of at least about 0.5 mole %.

5. A hot-melt composition according to claim 1 wherein said tackifying resin has a nominal ring and ball softening point of from about 70° to 125°C.

6. A hot-melt composition according to claim 1 comprising about 80 to 210 parts by weight of said tackifying resin per 100 parts by weight of said ethylene/methyl acrylate copolymer.

7. A hot-melt composition according to claim 1 further including a material selected from the group consisting of ethylene/n-butyl acrylate and ethylene/vinyl acetate copolymers.

8. A hot-melt composition according to claim 1 which has a creep resistance of at least 1,000 minutes.

9. A hot-melt composition according to claim 1 which has an elevated temperature strength of at least 1,000 minutes.

10. An article according to claim 23 wherein said layer of hot-melt composition has a thickness of about 50 to 250 microns.

11. An adhesive rod comprising a hot-melt composition according to any preceding claim.

Fig. 1

## EUROPEAN SEARCH REPORT

European Patent Office

Application Number

EP 92 31 0916

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 064 893 (SOCIETE CHIMIQUE DES CHARBONNAGES) * page 2, line 14 - line 22 * * page 3, line 31 - line 36 * --- | 1,2,6,7 | C09J123/08 |
| D,X Y | DE-A-2 523 617 (BASF) * page 2, paragraph 3; example 1 * --- | 1-3,6 4,5,8-11 | |
| D,Y | EP-A-0 340 990 (MINNESOTA MINING AND MANUFACTURING COMPANY) * page 3, line 48 - page 4, line 8 * * page 5, line 45 - line 51 * --- | 4,5,8-11 | |
| D,X | GB-A-1 463 846 (BASF) * page 1, column 1, line 37 - page 2, column 1, line 7 * ----- | 1-3,6 | |

TECHNICAL FIELDS SEARCHED (Int. Cl.5 )

C09J

The present search report has been drawn up for all claims

| Place of search | Date of completion of the search | Examiner |
|---|---|---|
| THE HAGUE | 03 MARCH 1993 | SCHMIDT H.R. |